# EUROPEAN PATENT SPECIFICATION

(11) **EP 3 321 072 B1**
(45) Date of publication and mention of the grant of the patent: **06.05.2020**
(21) Application number: 17196970.2
(22) Date of filing: 18.10.2017
(51) Int. Cl.: B29C 65/02, B65B 51/30, B65B 65/02, B29C 65/08, B29C 65/18, B65B 51/22

(54) **A TRANSVERSE WELDING ASSEMBLY FOR A FLOW-PACK PACKAGING MACHINE**
QUERSCHWEISSUNGSANORDNUNG FÜR EINE FLOWPACK-VERPACKUNGSMASCHINE
ENSEMBLE DE SOUDAGE TRANSVERSAL DESTINÉ À UNE MACHINE D'EMBALLAGE FLOW-PACK

(30) Priority: 15.11.2016 IT 201600115337
(43) Date of publication of application: 16.05.2018
(73) Proprietor: Cavanna S.p.A., 28077 Prato Sesia (NO) (IT)
(72) Inventor: IOPPA, Lorenzo, 28077 Prato Sesia (Novara) (IT); BROLLI, Elio, 28077 Prato Sesia (Novara) (IT)
(74) Representative: Marchitelli, Mauro

(56) References cited:
- JP-A- H0 542 916
- JP-A- H0 999 905
- JP-A- H09 124 008
- US-A1- 2001 010 144

## Description

### Field of the invention

The present invention relates in general to packaging machines and regards a transverse welding assembly for a flow-pack packaging machine.

### Description of the prior art

Flow-pack packaging machines typically comprise:
- a longitudinal welding assembly which carries out continuous longitudinal welding between two opposite longitudinal edges of a packaging film, so as to close the packaging film into a tubular shape around a continuous array of products, and
- a transverse welding assembly which carries out cuts and transverse welds on the packaging film, spaced apart in the longitudinal direction, so as to close and separate the individual packs from each other.

A transverse welding assembly for a flow-pack machine typically comprises two welding shafts that rotate with respect to a stationary support structure around two parallel axes, and that are driven into rotation in opposite directions. Typically, the transverse welding assembly comprises an electric motor connected to the two welding shafts by means of a gearbox and a gear transmission.

The gears used for transmitting motion from the motor to the welding elements are the cause of major drawbacks. Firstly, the gears are very noisy. In addition, the gears require periodic interventions for the recovery of clearances due to wear. Normally, every 5-6 months, maintenance work must be carried out for the recovery of clearances due to wear of the gears. In addition, when adjustments are made that modify the distance between the blades of the welding elements, the gears no longer work in the ideal gearing conditions. Lastly, gearboxes and gears in the transverse welding assembly require lubrication with grease or in an oil bath, and this entails contamination risks that are not compatible with the packaging of foodstuffs.

JP H05 42916 discloses a transverse welding device for a flow-pack packaging machine, comprising:
- a stationary support structure,
- a pair of welding shafts rotatably carried by the support structure about respective axes parallel to each other,
- a motor, and
- a pair of cardan shafts, each of which has a first end and a second end fixed to a respective welding shaft.

US2001010144, JP H09 99905 and JP H09 124008 disclose other devices for transversally sealing a packaging film sleeve.

### Object and summary of the invention

The present invention aims to provide a transverse welding assembly for a flow-pack packaging machine that overcomes the problems of the prior art

According to the present invention, this object is achieved by a transverse welding assembly having the characteristics forming the subject of claim 1.

The claims form an integral part of the disclosure provided here in relation to the invention.

### Brief description of the drawings

The present invention will now be described in detail with reference to the attached drawings, given purely by way of non-limiting example, wherein:
- Figure 1 is a perspective view of a transverse welding assembly according to the present invention,
- Figure 2 is a cross-section along the line II-II of Figure 1, and
- Figure 3 is a perspective view of a test bench for measuring the torsional stiffness of a cardan joint used in the transverse welding assembly according to the present invention.

### Detailed description

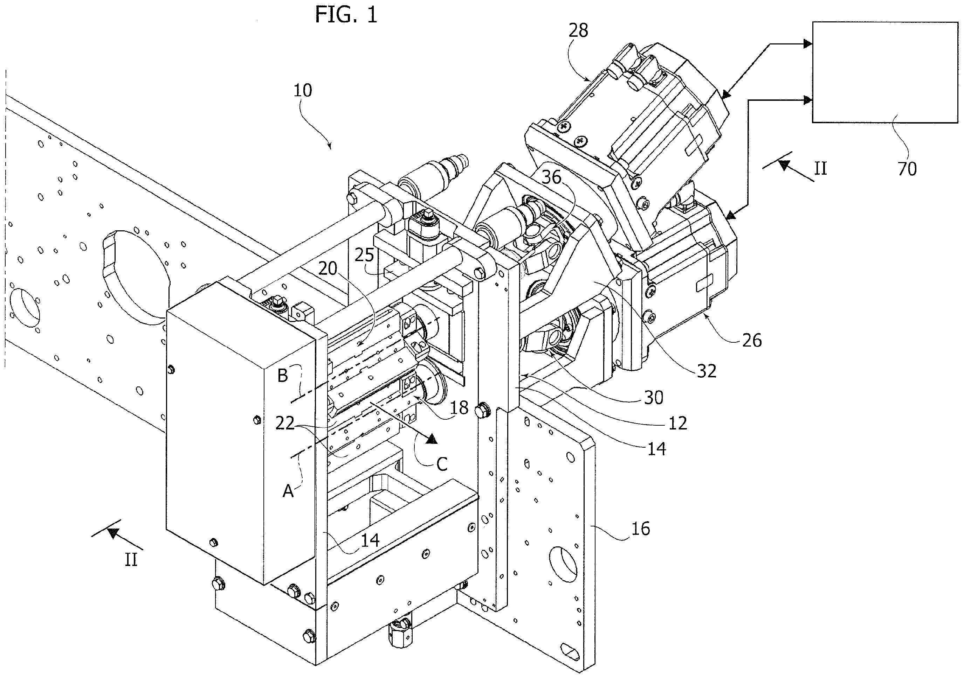

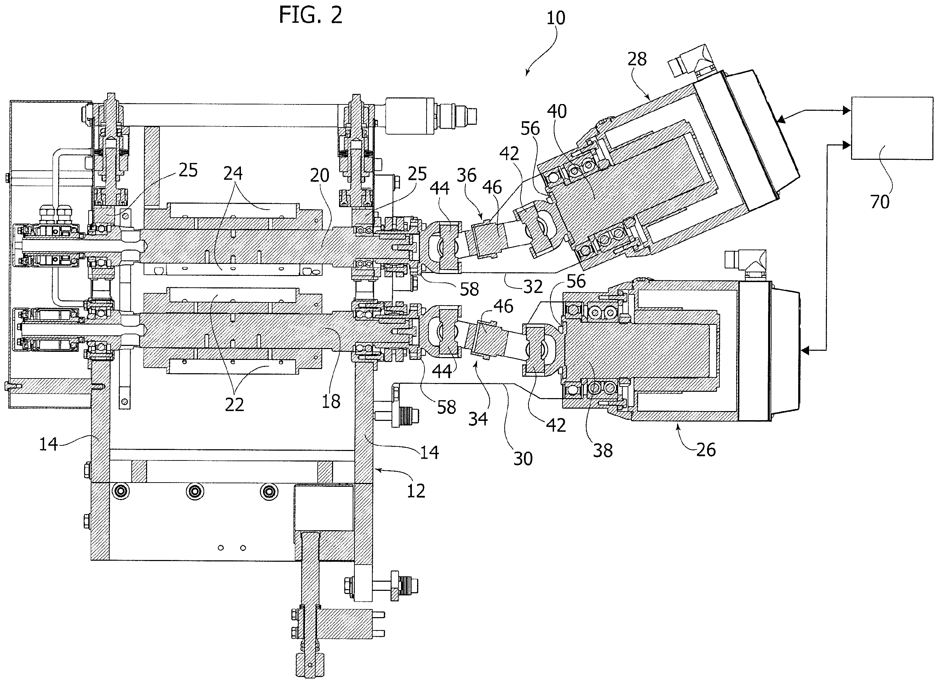

With reference to Figures 1 and 2, numeral 10 indicates a transverse welding assembly for a flow-pack packaging machine. The transverse welding assembly 10 comprises a stationary support structure 12 comprising two parallel vertical walls 14 attached to a longitudinal plate 16. The two vertical walls 14 carry a lower welding shaft 18 and an upper welding shaft 20, rotating about respective axes A, B, horizontal and parallel to each other. The welding shafts 18, 20 carry respective welding elements 22, 24 that cooperate with each other to carry out welding and cutting of a packaging film along a transverse direction with respect to the direction of movement of the packaging film. The lower welding shaft 18 is supported in rotation about the axis A by bearings carried directly from the side walls 14. The upper welding shaft 20 is supported in rotation about the axis B by means of bearings carried by two intermediate supports 25, which are movable vertically with respect to the side walls 14 and which cooperate with elastic elements that elastically push the intermediate supports 25 downwards, so that the welding elements 24 of the upper welding shaft 20 are elastically pressed against corresponding welding elements 22 of the lower welding shaft 18.

The welding elements 24 can be thermal welding elements, heated to a temperature at which they produce the welding for fusion of the film of packaging material, or ultrasonic welding elements. In the case of ultrasonic welding assemblies, the welding elements of one of the two welding shafts are connected to an ultrasound generator and the welding elements of the other welding shaft act as anvils.

The transverse welding assembly 10 comprises two torque motors 26, 28, which rotate respective welding shafts 18, 20 by means of direct transmissions without gears.

In general, torque motors are intended to transmit rotary motion without mechanical transmission, similar to linear motors for linear motions. Torque motors are intended to be used in direct drive systems in which the torque motor rotor is directly connected to the member to be rotated without mechanical transmissions.

Torque motors are distinguished from traditional servomotors by the following characteristics:
- low operating speed (less than 1000 rpm),
- high torque (normally greater than 30Nm),
- high frequency resolver (greater than 1 million pulses per turn).

In the transverse welding assembly 10, the torque motors 26, 28 are fixed to the stationary support structure 12 by means of respective brackets 30, 32. Each torque motor 26, 28 is connected to the respective welding shaft 18, 20 by means of a corresponding cardan shaft 34, 36.

With reference to Figure 2, each cardan shaft 34, 36 has a first end 56 directly fixed to the rotor 38, 40 of the respective torque motor 26, 28, and a second end 58 directly fixed to the respective welding shaft 18, 20. Each cardan shaft 34, 36 comprises a first cardan joint 42 and a second cardan joint 44 connected to each other by a telescopic shaft 46.

The cardan shafts 34, 36 must have particularly reduced torsional clearances. The torsional clearance of a cardan shaft 34, 36 coincides with the torsional stiffness of the shaft 34, 36 measured from a zero torsional load condition.

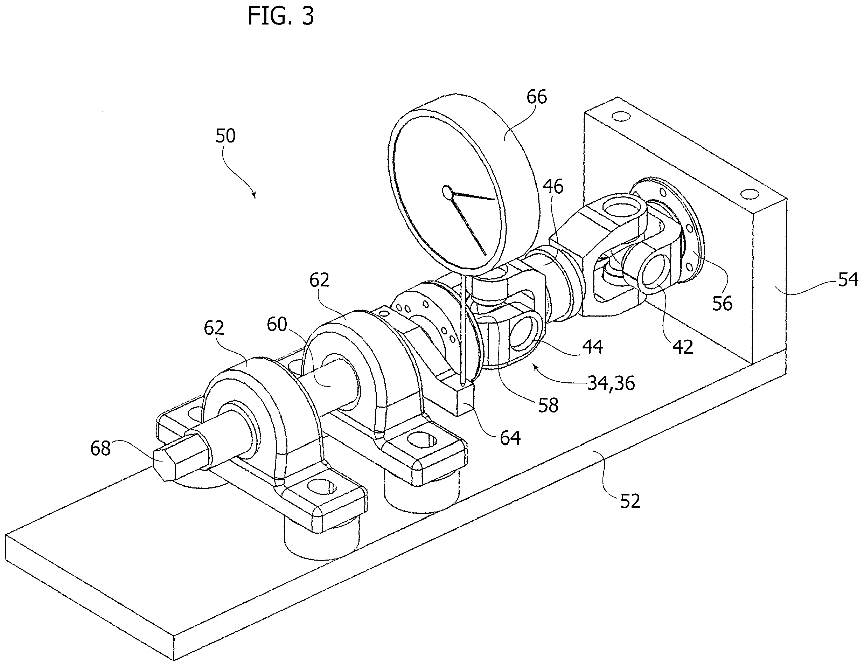

Figure 3 shows a test bench 50 for measuring the torsional stiffness of a cardan shaft 34, 36. The test bench 50 comprises a support formed by two walls 52, 54 fixed together in an L-shaped configuration. The first end 56 of the cardan shaft 34, 36 is fixed to the wall 54 and the second end 58 of the cardan shaft 34 , 36 is fixed to a shaft 60, which is rotatably mounted with respect to the first wall 52 by means of a pair of bearings 62. A comparator 66 acts on a radial flange 64, which is fixed onto the shaft 60. The shaft 60 has an end 68 with a polygonal cross-section engageable by a dynamometer key. Starting from an unloaded condition, a predetermined torque is applied to the cardan shaft 34, 36. The comparator 66 provides a measurement of the rotation angle corresponding to the recovery of the clearances of the cardan shaft 34, 36. The torsional stiffness of the cardan shaft 34, 36 is calculated as the ratio between the applied torque and the angle of rotation measured by the comparator 66. This parameter provides a measurement of the torsional clearances of the cardan shafts 34, 36. The higher the torsional stiffness of the cardan shaft 34, the lower the torsional clearances will be.

According to a characteristic of the present invention, the torsional stiffness of the cardan shafts 34, 36, measured as described above, must be greater than 22000 Nm/rad. These values of the torsional stiffness are obtained by using opposing pre-loaded, tapered bearings for the cardan joint crossings, and lamellae joints for the telescopic shafts of the cardan shafts.

The transverse welding assembly 10 comprises an electronic control unit 70, which controls the torque motors 26, 28 as a function of signals coming from encoders of the respective motors, so as to maintain - during operation- the welding elements 22, 24 in phase with each other and in phase with the continuous chain of products that advances between the two welding shafts 18, 20 in the longitudinal direction indicated by the arrow C in Figure 1.

The transverse welding assembly according to the present invention has the following advantages:
- it is considerably quieter than transverse welding assemblies with gear transmission;
- it does not require maintenance work for the recovery of clearances due to wear;
- the distance adjustments between the welding elements 22, 24 do not adversely affect the transmission operation conditions and are automatically compensated by the cardan shafts 34, 36 without the need for adjustment operations on the transmission,
- the upper torque motor 28 is not affected by vertical vibrations of the upper welding shaft 20 during cutting and welding operations,
- it can also be used for packaging foodstuffs because it does not require lubrication with grease or oil.

Of course, without prejudice to the principle of the invention, the details of construction and the embodiments can be widely varied with respect to those described and illustrated, without thereby departing from the scope of the invention as defined by the claims that follow.

## Claims

1. A transverse welding device for a flow-pack packaging machine, comprising:
- a stationary support structure (12),
- a pair of welding shafts (18, 20) rotatably carried by the support structure (12) about respective axes (A, B) parallel to each other,
- a pair of torque motors (26, 28), and
- a pair of cardan shafts (34, 36) each of which has a first end (56) directly fixed to the rotor (38, 40) of a respective torque motor (26, 28) and a second end (58) directly fixed to a respective welding shaft (18, 20).

2. A device according to claim 1, wherein each of said cardan shafts (34, 36) comprises two cardan joints (42, 44) connected together by a telescopic shaft (46).

3. A device according to claim 1 or claim 2, wherein each of said cardan shafts (34, 36) has a torsional stiffness greater than 2200 Nm/rad.

## Patentansprüche

1. Querschweißeinrichtung für eine Flowpack-Verpackungsmaschine, umfassend:
- eine ortsfeste Tragstruktur (12),
- ein Paar Schweißwellen (18, 20), die um jeweilige Achsen (A, B) drehbar parallel zueinander von der Tragstruktur (12) gehalten werden,
- ein Paar Drehmomentmotoren (26, 28) und
- ein Paar Kardanwellen (34, 36), von denen jede ein unmittelbar an dem Rotor (38, 40) eines jeweiligen Drehmomentmotors (26, 28) befestigtes erstes Ende (56) und ein unmittelbar an einer jeweiligen Schweißwelle (18, 20) befestigtes zweites Ende (58) aufweist.

2. Einrichtung nach Anspruch 1, wobei jede der Kardanwellen (34, 36) zwei durch eine Teleskopwelle (46) miteinander verbundene Kardangelenke (42, 44) umfasst.

3. Einrichtung nach Anspruch 1 oder Anspruch 2, wobei jede der Kardanwellen (34, 36) eine Verwindungssteifigkeit von mehr als 2200 Nm/rad aufweist.

## Revendications

1. Dispositif de soudage transversal pour une machine d'emballage de sacs thermosoudés, dit emballage « flow-pack », comprenant :
- une structure de support fixe (12),
- une paire d'arbres de soudage (18, 20) portés en rotation par la structure de support (12) autour d'axes respectifs (A, B) parallèles entre eux,
- une paire de moteurs couples (26, 28), et
- une paire d'arbres à cardan (34, 36) dont chacun a une première extrémité (56) fixée directement au rotor (38, 40) d'un moteur couple respectif (26, 28) et une deuxième extrémité (58) fixée directement à un arbre de soudage respectif (18, 20).

2. Dispositif selon la revendication 1, dans lequel chacun desdits arbres à cardan (34, 36) comprend deux joints de cardan (42, 44) reliés entre eux par un arbre télescopique (46).

3. Dispositif selon la revendication 1 ou 2, dans lequel chacun desdits arbres à cardan (34, 36) a une rigidité en torsion supérieure à 2200 Nm/rad.
